# EUROPÄISCHE PATENTSCHRIFT

(11) **EP 1 799 143 B1**
(45) Veröffentlichungstag und Bekanntmachung des Hinweises auf die Patenterteilung: **14.12.2011**
(21) Anmeldenummer: 05790055.7
(22) Anmeldetag: 29.09.2005
(51) Int. Cl.: A61C 17/02, A61D 5/00

(54) **VORRICHTUNG ZUR REINIGUNG UND/ODER PFLEGE VON ZÄHNEN UND/ODER ZAHNFLEISCH**
DEVICE FOR CLEANING AND/OR THE CARE OF TEETH AND/OR GUMS
DISPOSITIF POUR NETTOYER ET/OU SOIGNER DES DENTS ET/OU DES GENCIVES

(30) Priorität: 13.10.2004 DE 102004049950
(43) Veröffentlichungstag der Anmeldung: 27.06.2007
(73) Patentinhaber: Johnki, Bernd J., 46325 Borken (DE)
(72) Erfinder: Johnki, Bernd J., 46325 Borken (DE)
(74) Vertreter: Weisbrodt, Bernd
(86) Internationale Anmeldenummer: PCT/EP2005/010531
(87) Internationale Veröffentlichungsnummer: WO 2006/040018

(56) Entgegenhaltungen:
- WO-A-98/38944
- WO-A-03/039392
- DE-U1- 20 207 905
- US-A- 3 489 141
- US-A- 3 731 675
- US-A- 5 104 315

## Beschreibung

Die vorliegende Erfindung betrifft eine Vorrichtung zur Reinigung und/oder Pflege von Zähnen und/oder Zahnfleisch, mit einem eine abformlöffelähnliche Form aufweisenden Mundstück für einen Ober- und/oder einen Unterkiefer, welches wenigstens einen in wenigstens einer Düse zum Applizieren von Flüssigkeit auf Zähne und/oder Zahnfleisch endenden Kanal aufweist. Einesolche Vorrichtung ist beispielsweise aus der EP 0 865 770 A1 bekannt.

Im Stand der Technik sind Vorrichtungen zur Zahn- und Mundpflege in zahlreichen bekannt.

Die DE 729 861 offenbart beispielsweise eine Spülvorrichtung für Zähne und Mundschleimhaut, die mehrere innen- und außenseitig entlang der Zahnreihen bzw. -bögen verlaufende Rohre, welche zahlreiche Öffnungen zur Ausbildung von Spülstrahlen einer den Rohren zugeführten Spülflüssigkeit aufweisen, und einem sich an den Mund anschmiegenden Trichter, welcher zum Auffangen und Ableiten von aus dem Mundraum abfließender Spülflüssigkeit dient, umfasst. Aufgrund der konstruktiven Ausgestaltung der Spülvorrichtung gemäß der DIE 729 861 ist eine effektive und gründliche Reinigung und/oder Pflege von Zähnen und/oder Zahnfleisch nur bedingt erzielbar. Darüber hinaus ist die Handhabung der Spülvorrichtung gemäß der DE 729 861 überaus umständlich, schwierig und unbequem, insbesondere für pflege- bzw. hilfebedürftige wie bettlägerige oder querschnittsgelähmte Personen bzw. entsprechendes Pflegepersonal, da ein sicheres und sauberes Abführen von Spülflüssigkeit aus dem Mundraum über den Trichter nicht ermöglicht ist. Eine saubere und bequeme Anwendung der Reinigungsvorrichtung bei liegenden Personen ist insofern unmöglich.

Die DE 43 40 598 A1 offenbart ein Verfahren und eine Vorrichtung zur Reinigung von Zähnen. Dabei wird ein flüssiges und/oder gasförmiges Reinigungsmittel einem nach außen abgeschlossenen Umgebungsbereich aller Zähne eines Ober-und/oder eines Unterkiefers zugeführt und mit Ultraschall beaufschlagt. Der nach außen abgedichtet abgeschlossene Umgebungsbereich aller Zähne eines Ober-und/oder eines Unterkiefers ist von einem eine abformlöffelähnliche Form aufweisenden Mundstück für den Ober- und/oder Unterkiefer gebildet. In dem eine abformlöffelähnliche Form aufweisenden Mundstück für den Ober- und/oder Unterkiefer sind entlang den Zahnreihen verlaufende Leitungen bzw. Kanäle zur Zuführung von Reinigungsmittel zu den Zahninnen- bzw. Zahnaußenseiten ausgebildet. Die Kanäle sind von zahlreichen, schlitzartigen Öffnungen durchsetzt, durch die Reinigungsmittel den Zähnen zuführbar ist. Die Abgeschlossenheit des mit dem Reinigungsmittel versehenen Umgebungsbereichs der Zähne ist bei der DE 43 40 598 A1 wesentlich für die Reinigung der Zähne durch Ultraschall, die ansonsten nicht gegeben wäre. Eine Reinigung und/oder Pflege des Zahnfleischs ist aufgrund des Wirkungsprinzips der Ultraschallanwendung mit bei der Vorrichtung gemäß der DE 43 40 598 A1 nicht realisierbar. Die Handhabung des Mundstücks gemäß der DE 43 40 598 A1 ist für pflege- bzw. hilfebedürftige, insbesondere bettlägerige oder querschnittsgelähmte, Personen bzw. entsprechendes Pflegepersonal unbequem und umständlich, da das dem Mundstück zugeführte Reinigungsmittel nach erfolgter Ultraschallbeaufschlagung aus dem Mundraum entfernt werden muss. Eine saubere und bequeme Anwendung der Reinigungsvorrichtung bei liegenden Personen ist insofem ebenfalls weitestgehend unmöglich.

Aus der US 5,443,386 ist eine Zahnbürste bekannt, welche aus einem eine abformlöffelähnliche Form aufweisenden Mundstück für den Ober- und/oder Unterkiefer besteht. In dem Mundstück sind an unterschiedlichen, fest vorgegebenen Positionen Bürsten austauschbar angeordnet. Die Reinigung der Zähne erfolgt durch mechanische Bewegung des Mundstücks relativ zu den Zähnen. Weiter weist das Mundstück Ein- und Austrittsöffnungen auf, durch die Flüssigkeit zu- bzw. anführbar ist. Die Eintrittsöffnungen für die Flüssigkeit -sind dabei im Bereich der Bürsten angeordnet. Ein sicheres, sauberes und bequemes Entfernen der Flüssigkeit ist aufgrund der konstruktiven Ausgestaltung des Mundstücks der Zahnbürste gemäß der US 5,443,386, ebenfalls weitestgehend unmöglich, insbesondere bei liegenden Personen bzw. im liegenden Zustand einer Person. Darüber hinaus ist die mit der Zahnbürste gemäß der US 5,443,386 erzielbare Reinigung beschränkt, insbesondere aufgrund der fest vorgegebenen Positionen der Bürsten im Mundstück.

Die EP 0 865 770 A1 offenbart eine dentale Spülvorrichtung zur therapeutischen Zahn- und/oder Zahnpflegebehandlung. Die Spülvorrichtung besteht aus einem eine abformlöffelähnliche Form aufweisenden Mundstück für den Ober- und/oder Unterkiefer welches mit in Düsen endenden Spülkanälen versehen ist. Den Spülkanälen wird eine therapeutische Flüssigkeit zugeführt, die über die im Mundstück vorhandenen Düsen auf die äußeren Zahnreihen appliziert wird. Auch bei der Spülvorrichtung gemäß der EP 0 865 770 A1 ist ein sicheres, sauberes und bequemes Entfernen der applizierten Flüssigkeit aufgrund der konstruktiven Ausgestaltung unmöglich, insbesondere bei pflege- bzw. hilfebedürftigen Personen im liegenden Zustand der Person. Darüber hinaus ist die mit der seitens der EP 0 865 770 A1 offenbarten Spülvorrichtung erzielbare Reinigung von Zähnen und/oder Zahnfleisch aufgrund der Düsenanordnung stark beschränkt bzw. eingeschränkt.

Eine gattungsgemäße Reinigungsvorrichtung ist aus der US 3731675 bekannt. Der Erfindung liegt in Anbetracht dieses Standes der Technik die Aufgabe zugrunde, eine Vorrichtung der eingangs genannten Art hinsichtlich der Handhabung als solcher als auch hinsichtlich der erzielbaren Reinigungs-und/oder Pflegewirkung von Zähnen und/oder Zahnfleisch derart zu verbessern, daß eine effektivere und nachhaltigere Reinigung und/oder Pflege von Zähnen und/oder Zahnfleisch einfacher und bequemer durchführbar ist, insbesondere bei und/oder von pflege- bzw. hilfebedürftigen Personen im liegenden Zustand der Person.

Die Aufgabe ist bei einer Vorrichtung zur Reinigung und/oder Pflege von Zähnen und/oder Zahnfleisch, mit einem eine abformlöffelähnliche Form aufweisenden Mundstück für einen Ober- und/oder einen Unterkiefer, welches wenigstens einen in wenigstens einer Düse zum Applizieren von Flüssigkeit auf Zähne und/oder Zahnfleisch endenden Kanal aufweist, erfindungsgemäß durch Düsen deren Öffnungen im wesentlichen auf die aussenseitigen (vestibulären bzw. buccalen) Oberflächen der Zähne ausgerichtet sind, vorzugsweise einen Winkel zwischen der Strahlrichtung der Düsen und der idealisierten Zahnachse der Zähne von etwa 30° zur Wurzelspitze (apikal) der Zähne einnehmend ausgerichtet sind und durch Düsen deren Oberflächen im wesentlichen auf die innenseitigen (lingualen und/oder palatinalen) Oberflächen der Zähne ausgerichtet sind, vorzugsweise einen Winkel zwischen der Strahlrichtung der Düsen und der idealisierten Zahnachse der Zähne von etwa 15° zur Wurzelspitze (apikal) der Zähne einnehmend ausgerichtet sind, gelöst. Die Strahlrichtung einer Düse im Sinne der vorliegenden Erfindung ist dabei die idealisierte Hauptstrahlrichtung der Düse.

Der Erfindung liegt die Erkenntnis zugrunde, daß durch die Möglichkeit und Funktionalität des Absaugens von applizierter Flüssigkeit aus dem Mundstück vorteilhafterweise eine bequeme und saubere Anwendung der Vorrichtung zur Reinigung und/oder Pflege von Zähnen und/oder Zahnfleisch bei und/oder von pflege- bzw. hilfebedürftigen Personen im liegenden Zustand der Person ermöglicht wird, insbesondere ohne daß applizierte Flüssigkeit oder Speichel der Person von der Person, sei es versehentlich oder gewollt, verschluckt oder ausgespuckt werden müssen. Dabei ermöglicht es das erfindungsgemäße Mundstück vorteilhafterweise, daß der Mund während der Reinigungs- und/oder Pflegeanwendung geschlossen ist bzw. bleiben kann.

Erfindungsgemäß ist das Mundstück Zähne und/oder Zahnfleisch gegenüber dem Mundraum abdichtend im Mundraum anordbar. So wird weiter sichergestellt, daß über das Mundstück applizierte Flüssigkeit nur in den zu reinigenden bzw. pflegenden Bereich von Zähne und/oder Zahnfleisch gelangen kann. Erfindungsgemäß ist die Abdichtung gegenüber dem Mundraum durch Evakuierung erzielbar und/oder unterstützbar, durch Absaugen von applizierter Flüssigkeit. Ferner kann neben applizierter Flüssigkeit vorteilhafterweise auch sich im Mundraum ansammelnder Speichel und eventuell über Undichtigkeiten des Mundstücks in den Mundraum gelangende Flüssigkeit über das Mundstück abgesaugt werden, vorzugsweise durch eine als Durchgangsöffnung im Boden des Mundstücks ausgebildete ist und in den freien Mundraum reichende Absaugöffnung.

Erfindungsgemäß weist das Mundstück einen im wesentlichen parallel zum Ober- und/oder Unterkiefer verlaufenden Boden und im wesentlichen senkrecht zum Boden innen- und außenseitig entlang der Zahnreihen bzw. -bögen verlaufende Seitenwände auf. Vorteilhafterweise bilden die freien Enden der Seitenwände einen umlaufenden Dichtungsrand, welcher vorzugsweise innen- und außenseitig, das heißt beim Oberkiefer palatinal und vestibulär bzw. buccal und beim Unterkiefer lingual und vestibulär bzw. buccal, entlang der Zahnreihen bzw. -bögen umlaufend am Zahnfleisch anliegt.

Erfindungsgemäß sind die Kanäle und/oder Öffnungen zum Absaugen applizierter Flüssigkeit im Boden, in der innenseitig (palatinal beim Oberkiefer bzw. lingual beim Unterkiefer) entlang der Zahnreihen bzw. -bögen verlaufenden Seitenwand und/oder in der außenseitig (vestibulär bzw. buccal beim Ober- und/oder Unterkiefer) entlang der Zahnreihen bzw. -bögen verlaufenden Seitenwand des Mundstücks angeordnet.

In einer weiteren vorteilhaften Ausgestaltung der Erfindung sind die Kanäle und/oder Düsen zum Applizieren von Flüssigkeit auf Zähne und/oder Zahnfleisch im Boden, in der innenseitig (palatinal beim Oberkiefer bzw. lingual beim Unterkiefer) entlang der Zahnreihen verlaufenden Seitenwand und/oder in der außenseitig (vestibulär bzw. buccal beim Ober- und/oder Unterkiefer) entlang der Zahnreihen verlaufenden Seitenwand des Mundstücks angeordnet.

Vorteilhafterweise sind die Öffnungen der Düsen im wesentlichen auf die Oberfläche des Zahnkörpers der Zähne ausgerichtet, so daß Zähne einzeln vollständig und umfassend von allen Seiten her einer Reinigung und/oder Pflege unterziehbar sind. Vorteilhafterweise sind die Öffnungen der Düsen im wesentlichen auf die Oberflächen des Zahnkörpers der Backenzähne und/oder der Frontzähne (Schneide- und Eckzähne (Caninii und Incisivii)) ausgerichtet. Vorteilhafterweise sind die Öffnungen der Düsen im wesentlichen auf die Vertiefungen (okklusale Fissuren) in den Kauflächen der Backenzähne (Prämolaren, Molaren) und/oder auf die Schneidekanten (incisale Flächen bzw. Kanten) der Frontzähne (Schneide- und Eckzähne (Caninii und Incisivii)) ausgerichtet. Vorteilhafterweise sind die Öffnungen der Düsen in einer weiteren Ausgestaltung der Erfindung im wesentlichen auf die sichtbaren Zahnhälse (zervikales Areal) ausgerichtet. Vorteilhafterweise sind die Öffnungen der Düsen im wesentlichen auf den Raum zwischen zwei Zähnen ausgerichtet, vorzugsweise im wesentlichen auf die approximalen, das heißt die mesialen und/oder distalen Zahnseitenflächen.

Vorteilhafterweise sind die Öffnungen der Düsen in einer weiteren vorteilhaften Ausgestaltung der Erfindung im wesentlichen auf den Zahnfleischsaum ausgerichtet, vorzugsweise im wesentlichen auf die approximale und/oder die interdentale Zahnfleischpapille, besonders bevorzugt im wesentlichen Raum zwischen zwei Zähnen, so daß die jeweiligen mesialen und/oder distalen Zahnseitenflächen gezielt einer Reinigung und/oder Pflege unterziehbar sind.

Vorteilhafterweise weist der Boden des Mundstücks zumindest im Bereich der Front- und/oder der Seitenzähne noppenartige Erhöhungen und/oder Vertiefungen zur Bissfixierung auf. Dadurch ist der Sitz eines im Mundraum zur Reinigung und/oder Pflege von Zähnen und/oder Zahnfleisch angeordneten Mundstücks weitestgehend positionsgenau und lagegesichert. Darüber hinaus ist der Anwendungskomfort des Mundstück so weiter verbessert.

Das Mundstück ist vorteilhafterweise aus Gummi, Silikon und/oder Kautschuk, vorzugsweise aus Weichsilikon und/oder Silikonkautschuk. Das Mundstück kann so einfacher, bequemer und insbesondere Druckstellen und dergleichen vermeidend im Mundraum angeordnet bzw. aufgenommen werden und sich optimal an das Zahnfleisch anlegen, insbesondere dichtend anlegen.

In einer konkreten Ausgestaltung der Erfindung sind die Kanäle im im Bereich der Schneidezähne liegenden Bereich aus dem Mundstück herausgeführt, vorzugsweise über ein flanschartiges Anschlussstück, welches besonders bevorzugt am Mundstück ausgebildet ist.

In einer besonders vorteilhaften Ausgestaltung der Erfindung sind die Kanäle bzw. Düsen zum Applizieren von Flüssigkeit in aufeinander abgestimmten bzw. an einander angepassten Zyklen mit Flüssigkeit beaufschlagbar. Vorteilhafterweise sind die Kanäle bzw. Düsen zum Applizieren von Flüssigkeit alternierend mit Flüssigkeit beaufschlagbar. Vorteilhafterweise ist die Flüssigkeit zur Intensivierung der Reinigungs- und/oder Pflegewirkung in Stoßimpulsen applizierbar. In einer weiteren vorteilhaften Ausgestaltung der Erfindung ist die Flüssigkeit mit vorgebbarem und/oder individuell einstellbarem Druck applizierbar. In einer weiteren bevorzugten Ausgestaltung der Erfindung ist applizierte Flüssigkeit kontinuierlich absaugbar, wozu die Kanäle bzw. die Öffnungen zum Absaugen applizierter Flüssigkeit kontinuierlich mit einem Druck (Saugdruck)-beaufschlagbar sind, der unterhalb des Umgebungsdrucks des Mundstücks liegt. Vorteilhafterweise ist der unterhalb des Umgebungsdrucks des Mundstücks liegende Druck (Saugdruck) individuell einstellbar ist, so daß der Sitz des Mundstücks im Mundraum für Reinigungs- und/oder Pflegeanwendungen optimal und bequem einstellbar ist.

Durch die Verwendung der genannten unterschiedlich ausgerichteten Düsen bzw. Düsenanordnungen und die verschiedenen kombinativen Möglichkeiten zur Flüssigkeitsbeaufschlagung lassen sich so kombinativ verschiedene Reinigungs-und/oder Pflegemuster erzeugen, die vorteilhafterweise insbesondere an die individuellen Reinigungs- und/oder Pflegebedürfnisse und/oder -wünsche des jeweiligen Anwenders anpassbar sind.

Eine weitere besonders vorteilhafte Ausgestaltung der Erfindung sieht vor, daß das Applizieren von Flüssigkeit und/oder das Absaugen von applizierter Flüssigkeit durch eine mit den Kanälen im Mundstück verbindbare programmierbare, vorzugsweise individuell programmierbare, Steuereinrichtung erfolgt.

In einer besonders bevorzugten Ausgestaltung der Erfindung ist die Steuereinrichtung mittels Kartuschen vorportionierter Applikationsflüssigkeit und/oder Kartuschen mit mit Flüssigkeit bzw. in Flüssigkeit lösbaren Applikationsmitteln, beispielsweise in Pulverform, Gelform, Tablettenform oder dergleichen, programmierbar. Bei dieser Ausgestaltung der Erfindung erfolgt durch die Kartuschen vorportionierter Applikationsflüssigkeit und/oder Kartuschen mit mit Flüssigkeit bzw. in Flüssigkeit lösbaren Applikationsmitteln eine mechanische Programmierung der Steuereinrichtung, dabei werden beispielsweise anhand von Rastnasen und/oder Vertiefungen an dem Gehäuse einer Kartusche entsprechende für die Anwendung der sich jeweils in der Kartusche befindlichen Reinigungsflüssigkeit vorgesehene Reinigungs- und/oder Pflegemuster programmgesteuert ausgeführt. Dadurch wird insbesondere die Handhabung für den Benutzer erleichtert und Fehlbedienungen hinsichtlich der jeweiligen Anwendung der Flüssigkeit verhindert.

Vorteilhafterweise sind die Kanäle mit der Steuereinrichtung über Schläuche lösbar verbindbar, vorzugsweise mittels einer Schnellverschlusskupplung oder dergleichen lösbaren Verbindungsmittel, beispielsweise einem sogenannten "Sixtube"-Schlauchanschluß der Colder Products Company.

In einer weiteren vorteilhaften Ausgestaltung der Erfindung beinhaltet die Flüssigkeit Mund- bzw. Zahnreinigungs- und/oder Pflegestoffe und/oder Zahnschmelzaufbau- bzw. Zahnschmelzstärkungsstoffe, vorzugsweise in Form von Nanopartikeln oder gekapselten Mikropartikeln. Derartige Zahnreinigungs- bzw. Zahnpflegemittel sind beispielsweise seitens der GB 2 354 709 A, der WO 01/89462 A2 oder der WO 02/17868 A1 offenbart.

Eine weitere besonders vorteilhafte Ausgestaltung der Erfindung betrifft eine erfindungsgemäße Vorrichtung zur Reinigung und/oder Pflege von Zähnen und/oder Zahnfleisch, bei der das eine abformlöffelähnliche Form aufweisende Mundstück hinsichtlich der Form an den Oberkiefer beziehungsweise Unterkiefer eines Haustieres, vorzugsweise eines Hundes oder einer Katze, angepasst ist. Erfindungsgemäß wird so vorteilhafterweise eine Vorrichtung zur Reinigung und/oder Pflege von Zähnen und/oder Zahnfleisch von Haustieren, vorzugsweise von Hunden oder Katzen, bereitgestellt.

Weitere Einzelheiten, Merkmale und Vorteile der Erfindung werden nachfolgend anhand der in der Zeichnung dargestellten Figuren näher erläutert. Dabei zeigen:
- Fig. 1: in einer schematisch perspektivischen Ansicht ein Ausführungsbeispiel eines Mundstücks einer erfindungsgemäßen Vorrichtung zur Reinigung und/oder Pflege von Zähnen und/oder Zahnfleisch;
- Fig. 2a: eine schematische Seitenansicht des Mundstücks gemäß Fig. 1;
- Fig. 2b: eine geschnittene Ansicht des Mundstücks entlang der Schnittlinie C-C **gemäß** **Fig. 2a****;**
- Fig. 3a: eine schematische Draufsicht auf das Mundstück gemäß Fig. 1;
- Fig. 3b: eine geschnittene Ansicht des Mundstücks entlang der Schnittlinie A-A **gemäß** **Fig. 3a****;**
- Fig. 3c: eine geschnittene Ansicht des Mundstücks entlang der Schnittlinie B-B **gemäß** **Fig. 3a****;**
- Fig. 3d: eine geschnittene Ansicht des Mundstücks entlang der Schnittlinie D-D gemäß Fig. 3a;
- Fig. 3e: eine geschnittene Ansicht des Mundstücks entlang der Schnittlinie E-E gemäß Fig. 3a;
- Fig. 4a: eine weitere schematische Seitenansicht des Mundstücks gemäß Fig. 1
- Fig. 4b: eine geschnittene Ansicht des Mundstücks entlang der Schnittlinie F-F gemäß Fig. 4a und
- Fig. 5: ein prinzipielles Ausführungsbeispiel für die Ansteuerung der verschiedenen Kanäle bzw. Düsen zum Applizieren von Flüssigkeit auf Zähne und/oder Zahnfleisch und der Kanäle bzw. Öffnungen zum Absaugen applizierter Flüssigkeit eines Reinigungs- bzw. Pflegezyklusses.

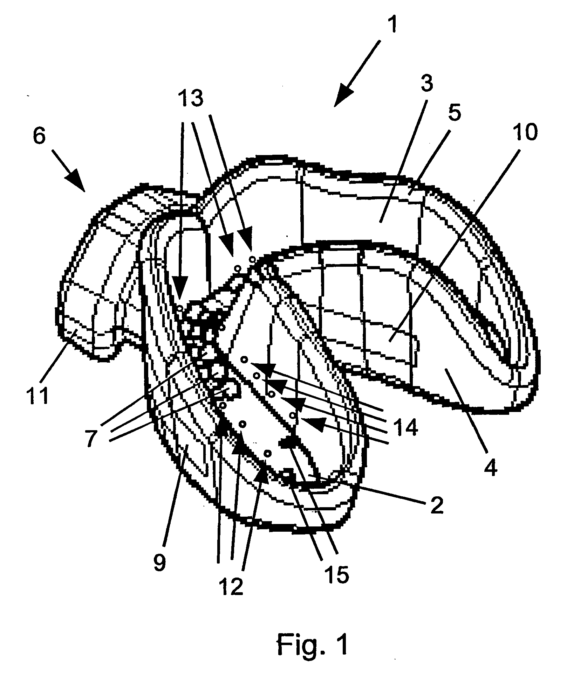

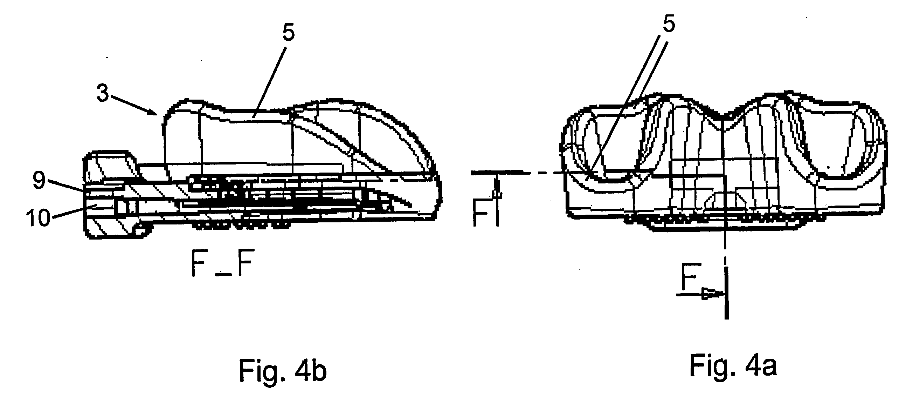

Das in den Figuren 1 bis 4b dargestellte Mundstück 1 ist als ein energetisch passives Element aus Weichsilikon aufgebaut und kann vorteilhafterweise in verschiedene Größen, beispielsweise für Kinder bzw. Erwachsene, oder individuell passend hergestellt werden. Die äußere Form des Mundstücks 1 ist einem zahnmedizinischen Abformlöffel für den Ober- bzw. Unterkiefer nachempfunden. Das vorliegend dargestellte Mundstück 1 ist auf Umschlag im Mundraum einsetzbar, das heißt durch eine Drehung um 180° für wahlweise und/oder abwechselnd für Reinigungs- und/oder Pflegeanwendungen im Ober- als auch Unterkiefer einsetzbar.

Das Mundstück 1 weist einen im wesentlichen parallel zum Ober- und/oder Unterkiefer verlaufenden Boden 2 und im wesentlichen senkrecht zum Bonden 2 innen- und außenseitig entlang der Zahnreihen bzw. -bögen verlaufende Seitenwände 3 und 4 auf. Die freien Enden der Seitenwände 3 und 4, das heißt die im eingesetzten Zustand des Mundstücks 1 im Mundraum zur Mundschleimhaut hin abgerundeten Flanken, bilden einen umlaufenden Dichtungsrand 5, der für den Oberkiefer in der Umschlagfake des Mundvorhofes, im Bereich der Backentaschen und im Gaumendach und für den Unterkiefer in der Umschlagfalte des Mundvorhofes, im Bereich der Backentaschen und im Unterzungenbereich zu liegen kommt.

Der Boden 2 des Mundstücks weist auf seinen beiden Seiten im Bereich der Front- und der Seitenzähne noppenartige Erhöhungen 7 zur verbesserten Bissfixierung des Mundstücks 1 auf. Die auf der Innenseite des Mundstücks 1 zwischen den Seitenwänden 3 und 4 am Boden angeordneten noppenartigen Erhöhungen dienen sowohl einer sicheren Bissfixierung des Mundstücks 1 als auch als Abstandshalter zwischen Zahnoberfläche und Boden 2 des Mundstücks 1.

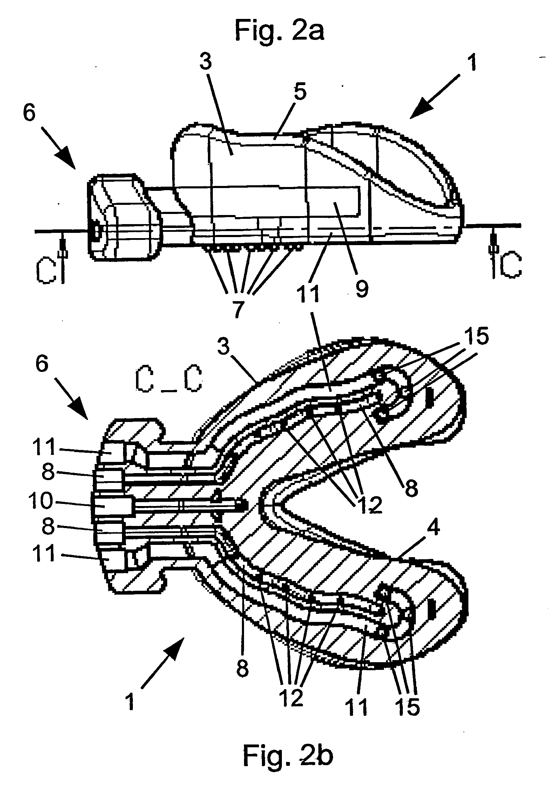

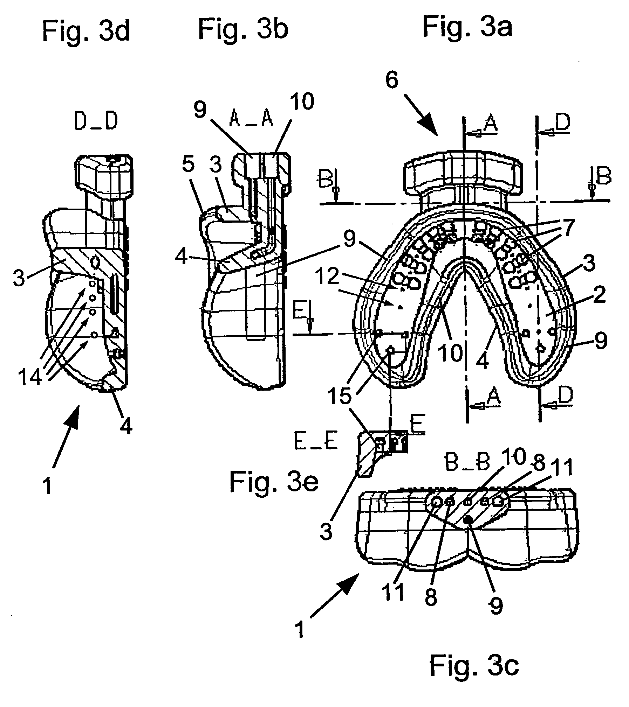

Wie insbesondere anhand von Fig. 2b und 3a erkennbar, sind im Boden 2 in Düsen 12 endende Kanäle 8 und in Öffnungen 15 endende Kanäle 11, in der inneren Seitenwand 4 in Düsen 14 endende Kanäle 10 und in der äußeren Seitenwand 3 in Düsen 13 endende Kanäle 9 angeordnet bzw. ausgebildet, welche im im Bereich der Schneidezähne liegenden Bereich aus dem Mundstück 1 über ein flanschartiges Anschlussstück 6 herausgeführt sind.

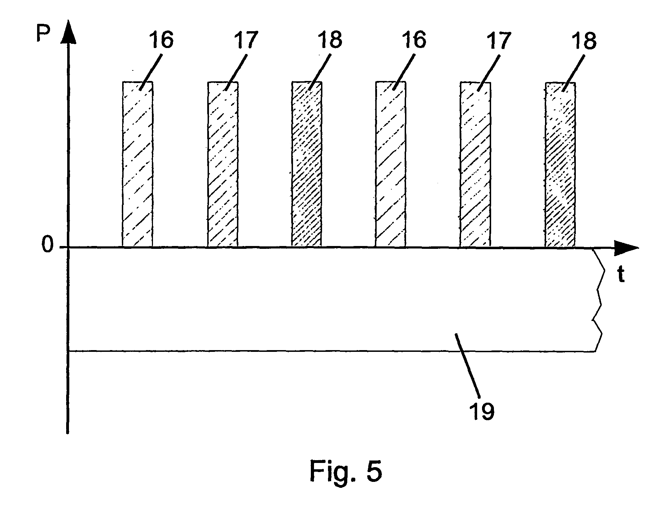

Die beiden Kanäle 11 im Boden 2 des Mundstücks 1 weisen jeweils im im Bereich der Backenzähne zu liegen kommenden Bereich jeweils drei Öffnungen 15 auf, die im wesentlichen zur Absaugung von applizierter Flüssigkeit und/oder von leckagierter Flüssigkeit bzw. Speichel dienen. Die Öffnungen 15 weisen vorliegend jeweils einen Durchmesser von etwa 2 mm auf. Durch diese Öffnungen wird der die Zähne und Zahnfleisch umgebene Innenraum des Mundstücks durch Absaugen evakuiert, vorzugsweise permanent bzw. kontinuierlich, wie in Fig. 5 dargestellt.

Die beiden Kanäle 8 im Boden des Mundstücks 1 weisen vorliegend jeweils acht Düsen 12 auf, die in einer Linie entlang der Zahnreihen bzw. -bögen angeordnet sind. Vorliegend sind die Austrittsöffnungen der Düsen 12 im wesentlichen mittig auf die idealisierte Zahnachse ausgerichtet. Mit den Düsen 12 dieser Düsenlinie erfolgt vorliegend im wesentlichen eine Reinigung und/oder Pflege der Vertiefungen (okklusale Fissuren) in den Kauflächen der Backenzähne (Prämolaren, Molaren) und der Schneidekanten (incisale Flächen bzw. Kanten) der Frontzähne (Schneide- und Eckzähne (Caninii und Incisivii)) und ferner der weiteren Oberflächen des Zahnkörpers der Backenzähne und der Frontzähne (Schneide- und Eckzähne (Caninii und Incisivii)).

Die beiden Kanäle 9 in der äußeren Seitenwand 3 des Mundstücks 1 weisen vorliegend zusammen dreizehn Düsen 13 auf, die in einer Linie entlang der Außenseite (vestibulären bzw. buccalen) der Zahnreihen bzw. -bögen angeordnet sind. Vorliegend sind die Austrittsöffnungen der Düsen 13 im wesentlichen auf die außenseitigen (vestibulären bzw. buccalen) Oberflächen der Zähne ausgerichtet und nehmen dabei einen Winkel zwischen der Hauptstrahlrichtung der Düsen 13 und der idealisierten Zahnachse der Zähne (Ausrichtung zur gedachten Wurzelspitze (apikal)) von etwa 30° ein. Mit den Düsen 13 dieser Düsenlinie erfolgt vorliegend im wesentlichen eine Reinigung und/oder Pflege der Räume zwischen zwei Zähnen, insbesondere der approximalen, das heißt die mesialen und/oder distalen Zahnseitenflächen, des Zahnfleischsaums, der approximalen und/oder der interdentalen Zahnfleischpapille, insbesondere im Raum zwischen zwei Zähnen, und ferner der sichtbaren Zahnhälse (zervikales Areal).

Die beiden Kanäle 10 in der inneren Seitenwand 4 des Mundstücks 1 weisen vorliegend jeweils sieben Düsen 14 auf, die in einer Linie entlang der Innenseite (palatinal beim Oberkiefer bzw. lingual beim Unterkiefer) der Zahnreihen bzw. - bögen angeordnet sind. Vorliegend sind die Austrittsöffnungen der Düsen 14 im wesentlichen auf die innenseitigen (palatinal beim Oberkiefer bzw. lingual beim Unterkiefer) Oberflächen der Zähne ausgerichtet und nehmen dabei einen Winkel zwischen der Hauptstrahlrichtung der Düsen 13 und der idealisierten Zahnachse der Zähne (Ausrichtung zur gedachten Wurzelspitze (apikal)) von etwa 15° ein. Mit den Düsen 14 dieser Düsenlinie erfolgt vorliegend im wesentlichen eine Reinigung und/oder Pflege der innenseitigen (lingualen und/oder palatinalen) Oberflächen der Zähne und des Zahnfleischsaums, der approximalen und/oder der interdentalen Zahnfleischpapille, insbesondere im Raum zwischen zwei Zähnen, und ferner der sichtbaren Zahnhälse (zervikales Areal).

Die Ausrichtung der Düsen 12, 13 und 14 der drei Düsenlinien realisiert vorliegend eine umfassende Reinigung und/oder Pflege des Zahnhartgewebes der Zähne und des Zahnfleisches, insbesondere da aufgrund von Reflektionen der applizierten Flüssigkeit an den Zähnen und durch Kombinationen von Sprüh-und/oder Spülstrahlen alle Bereiche der Zähne und des Zahnfleisches einer gleichmäßigen und schonenden Behandlung unterziehbar sind.

Zum Applizieren von Flüssigkeit und/oder das Absaugen von applizierter Flüssigkeit ist eine einen Mikrocontroller aufweisende individuell programmierbare Steuereinrichtung vorgesehen. Auch kann die programmierbare Steuereinrichtung mit rein hydraulischen und/oder pneumatischen Mitteln bzw. Komponenten ausgebildet sein. Die Steuereinrichtung umfasst vorliegend wenigstens eine von dem Mikrocontroller bzw. hydraulischen und/oder pneumatischen Mitteln bzw. Komponenten entsprechend der Programmierung ansteuerbare Pumpe zum Applizieren von drei verschiedenen aufeinander abgestimmten Behandlungsflüssigkeiten. Die Behandlungsflüssigkeiten werden dabei von der Pumpe aus einem für die jeweilige Behandlungsflüssigkeit vorgesehenen Vorratsbehälter abgepumpt. Dabei werden die Kanäle 8, 9 und 10 vorliegend mit Stoßimpulsen 16, 17 und 18 der verschiedenen Behandlungsflüssigkeken zyklisch wiederholend beaufschlagt, vorliegend in zwei Zyklen wie anhand von Fig. 5 erkennbar. Die Zeitdauer als auch der Druck der Stoßimpulse 16, 17 und 18 sind dabei individuell programmiert vorgebbar. Vorliegend sind die Zeitdauer als auch der Druck der Stoßimpulse 16, 17 und 18 und die zeitlichen Pausen zwischen diesen gleich ausgebildet. Anstelle einer Pumpe für die verschiedenen Behandlungsflüssigkeiten 16, 17 und 18 kann alternativ auch für jede Behandlungsflüssigkeit 16, 17 und 18 eine separate Pumpe vorgesehen sein.

Die Steuereinrichtung umfasst vorliegend weiter eine Pumpe zum Absaugen von Behandlungsflüssigkeit durch die Öffnungen 15 der Kanäle 11 aus dem Mundstück 1, um dieses zu evakuieren. Die Pumpe ist ebenfalls von dem Mikrocontroller bzw. hydraulischen und/oder pneumatischen Mitteln bzw. Komponenten der Steuereinrichtung entsprechend der individuellen Programmierung angesteuert. Vorliegend wird im Rahmen der Behandlungszyklen mit der Pumpe kontinuierlich mit einem individuell vorgebbaren Unterdruck (Saugdruck) applizierte Behandlungsflüssigkeit aus dem Mundstück 1 abgesaugt wie anhand des in Fig. 5 mit dem Bezugszeichen 19 gekennzeichneten Kurvenverlaufs der Absaugpumpe erkennbar ist. Die abgesaugte applizierte Behandlungsflüssigkeit kann anschließend direkt in ein Abwassernetz entsorgt oder alternativ in einem Auffangbehälter zur anschließenden Entsorgung oder Aufbereitung gesammelt werden.

Die individuell programmierbare Steuereinrichtung ermöglicht so vorteilhafterweise jederzeit reproduzierbare und präzise Zyklen zur Reinigungs- und/oder Pflegebehandlung. Die Programmierung kann dabei über Kartuschen mit Behandlungsflüssigkeit bzw. mit in Flüssigkeit lösbaren Behandlungsmitteln als auch vorteilhafterweise über biometrische Identifikationsinformationen des jeweiligen Nutzers erfolgen, beispielsweise Fingerabdrücke oder dergleichen.

Die in den Figuren dargestellten Ausführungsbeispiele der Erfindung dienen lediglich der Erläuterung der Erfindung und sind für diese nicht beschränkend.

### Bezugszeichenliste:

- 1: Mundstück
- 2: Boden
- 3: Seitenwand (außenseitig)
- 4: Seitenwand (innenseitig)
- 5: Dichtungsrand
- 6: Schlauchanschlussstück
- 7: Noppen (Bissfixierung)
- 8: Kanal (Düsen (12) (Boden(2)))
- 9: Kanal (Düsen(13) (äußere Seitenwand (3)))
- 10: Kanal (Düsen (14) (innere Seitenwand (4)))
- 11: Kanal (Absaugöffnungen (15) (Boden (2)))
- 12: Düsen (Boden (2))
- 13: Düsen (äußere Seitenwand (3))
- 14: Düsen (innere Seitenwand (4))
- 15: Absaugöffnung (Boden 2)
- 16: Stoßimpuls Flüssigkeit (Kanal (8)/Düsen (12))
- 17: Stoßimpuls Flüssigkeit (Kanal (8)/Düsen (12))
- 18: Stoßimpuls Flüssigkeit (Kanal (8)/Düsen (12))
- 19: Absaugen applizierter Flüssigkeit (kontinuierlich)
- P: Druck
- t: Zeit

## Patentansprüche

1. Vorrichtung zur Reinigung und/oder Pflege von Zähnen und/oder Zahnfleisch, mit einem eine abformlöffelähnliche Form aufweisenden Mundstück (1) für einen Ober- und/oder einen Unterkiefer, welches Zähne und/oder Zahnfleisch gegenüber dem Mundraum abdichtend im Mundraum anordbar ist, einen Im wesentlichen parallel zum Ober- und/oder Unterkiefer verlaufenden Boden (2) und im wesentlichen senkrecht zum Boden (2) innen- und außenseitig entlang der Zahnreihen verlaufende Seitenwände (3, 4), wenigstens einen in wenigstens einer Düse (12, 13, 14) zum Applizieren von Flüssigkeit (16, 17, 18) auf Zähne und/oder Zahnfleisch endenden Kanal (8, 9, 10)
und weinigstens einen in wenigstens einer Öffnung (15) endenden Kanal (11) zum Absaugen von applizierter Flüssigkeit und/oder Speichel aufwelst, wobei die Abdichtung gegenüber dem Mundraum durch Absaugen von applizierter Flüsslgkelt und/oder Spelchel aus dem gegenüber dem Mundraum abgedichteten Mundstück (1) erzielbar und/oder unterstützbar Ist, dabel sind die Kanäle (8, 9, 10) und/oder Düsen (12, 13, 14) zum Applizieren von Flüsslgkeit auf Zähne und/oder Zahnfleisch und die Kanäle (11) und/oder Öffnungen (15) zum Absaugen applizierter Flüsslgkelt im Boden (2), In der innenseltig entlang der Zahnreihen verlaufenden Seitenwand (4) und/oder in der außenseitig entlang der Zahnreihen verlaufenden Seitenwand (3) des Mundstücks (1) angeordnet,
**gekennzeichnet durch**
Düsen (12, 13) deren Öffnungen im wesentlichen auf die vestibulären bzw, buccalen Oberflächen der Zähne mit einem Winkel zwischen der Strahlrichtung der Düsen (12, 13) und der ideallsierten Zahnachse der Zähne von etwa 34° zur Wurzelspitze der Zähne einnehmend ausgerichtet sind und **durch** Düsen (12, 14) deren Öffnungen Im wesentlichen auf die lingualen und/oder palatlnalen Oberflächen der Zähne mit einem Winkel zwischen der strahlrichtung der Düsen (12, 14) und der Idealisierten Zahnachse der Zähne von etwa 15° zur Wurzelspitze der Zähne einnehmend ausgerichtet sind.

2. Vorrichtung nach Anspruch 41, **dadurch gekennzeichnet, daß** die freien Enden der Seitenwände (3, 4) einen umlaufenden Dichtungsrand (6) bilden.

3. Vorrichtung nach Anspruch 1 oder Anspruch 2, **dadurch gekennzeichnet, daß** die Öffnungen der Düsen (12, 13, 14) im wesentlichen auf die Oberflächen des Zahnkörpers der Zähne ausgerichtet sind.

4. Vorrichtung nach einem der Ansprüche 1 bis 8 3, **dadurch gekennzeichnet, daß** die Öffnungen der Düsen (12, 13, 14) im wesentlichen auf die Oberflächen des Zahnkörpers der Backenzähne und/oder der Frontzähne ausgerichtet sind.

5. Vorrichtung nach einem der Ansprüche 1 bis 9 4, **dadurch gekennzeichnet, daß** die Öffnungen der Düsen (12, 13, 14) im wesentlichen auf die Vertiefungen in den Kauflächen der Backenzähne und/oder auf die Schneidekanten der Frontzähne ausgerichtet sind.

6. Vorrichtung nach einem der Ansprüche 1 bis 5, **dadurch gekennzeichnet, daß** die Öffnungen der Düsen (12, 13, 14) im wesentlichen auf die sichtbaren Zahnhälse ausgerichtet sind.

7. Vorrichtung nach einem der Ansprüche 1 bis 6, **dadurch gekennzeichnet, daß** die Öffnungen der Düsen (12, 13, 14) im wesentlichen auf den Raum zwischen zwei Zähnen ausgerichtet sind,

8. Vorrichtung nach Anspruch 7, **dadurch gekennzeichnet, daß** die Öffnungen der Düsen (12, 13, 14) Im wesentlichen auf die mesialen und/oder distalen Zahnaelterlflächen ausgerichtet sind.

9. Vorrichtung nach einem der Ansprüche 1 bis 8, **dadurch gekennzeichnet, daß** die Öffnungen der Düsen (12, 13, 14) Im wesentlichen auf den Zahnfleischaaum ausgerichtet sind,

10. Vorrichtung nach Anspruch 9, **dadurch gekennzeichnet, daß** die Öffnungen der Düsen (12, 13, 14) Im wesentlichen auf die approximale und/oder die interdentale Zahnflelschpaplile ausgerlchtet sind.

11. Vorrichtung nach Anspruch 10, **dadurch gekennzeichnet, daß** die Öffnungen der Düsen (12, 13, 14) im wesentlichen auf die approximale und/oder die Interdentale Zahnfieischpapille im Raum zwischen zwei Zähnen ausgerichtet sind.

12. Vorrichtung nach einem der Ansprüche 1 bis 11, **dadurch gekennzeichnet, daß** der Boden (2) des Mundstücks (1) zumindest im Bereich der Front- und/oder der Seitenzähne noppenartige Erhöhungen (7) und/oder Vertiefungen zur Bissfixierung ausweist.

13. Vorrichtung nach einem der Ansprüche 1 bis 12, **dadurch gekennzeichnet, daß** das Mundstück (1) aus Gummi, Silikon und/oder Kautschuk is .

14. Vorrichtung nach Anspruch 13, **dadurch gekennzeichnet, dass** das Mundstück (1) aus Welchsilikon und/oder Sllikonkautschuk Ist.

15. Vorrichtung nach einem der Ansprüche 1 bis 14, **dadurch gekennzeichnet, daß** die Kanäle (8, 9, 10, 11) im im Bereich der Schneidezähne liegenden Bereich aus dem Mundstück (1) herausgeführt sind .

16. Vorrichtung nach Anspruch 15, **dadurch gekennzeichnet, daß** die Kanäle (8, 9, 10, 11) über ein flanschartiges Anschlussstück (6) aus dem Mundstück (1) herausgeführt sind.

17. Vorrichtung nach einem der Ansprüche 1 bis 16, **dadurch gekennzeichnet, daß** die Kanäle (8, 9, 10) bzw. Düsen (12, 13, 14) zum Applizieren von Flüssigkeit In aufeinander abgestimmten bzw. an einander angepassten Zyklen mit Flüsslgkeit beaufschlagbar sind.

18. Vorrichtung nach Anspruch 17, **dadurch gekennzeichnet, daß** die Kanäle (8, 9, 10) bzw. Düsen (12, 13, 14) zum Applizieren von Flüssigkeit alternierend mit Flüssigkeit beaufschlagbar sind.

19. Vorrichtung nach Anspruch 17 oder Anspruch 18, **dadurch gekennzeichnet, daß** die Flüssigkeit in Stoßimpulsen (16, 17, 18) applizierbar ist.

20. Vorrichtung nach einem der Ansprüche 1 bis 19, **dadurch gekennzeichnet, daß** die Flüssigkeit mit vorgebbarem und/oder Individuell einstellbarem Druck applizierbar ist,

21. Vorrichtung nach einem der Ansprüche 1 bis 20, **dadurch gekennzeichnet, daß** applizierte Flüssigkeit kontinuierlich absaugbar Ist, wozu die Kanäle (11) bzw. Öffnungen (15) zum Absaugen applizierter Flüssigkeit kontinuierlich mit einem Druck beaufschlagbar sind, der unterhalb des Umgebungsdrucks des Mundstücks (1) liegt.

22. Vorrichtung nach Anspruch 21, **dadurch gekennzeichnet, daß** der unterhalb des Umgebungsdrucks des Mundstücks (1) liegende Druck individuell einstelibar ist.

23. Vorrichtung nach einem der Ansprüche 1 bis 22, **dadurch gekennzeichnet, daß** das Applizieren von Flüssigkeit und/oder das Absaugen von applizierter Flüssigkeit durch eine mit den Kanälen (8, 9, 10,11) im Mundstück verbindbare programmierbare, Steuereinrichtung erfolgt.

24. Vorrichtung nach Anspruch 23, **dadurch gekennzeichnet, dass** die Steuereinrichtung individuell programmierbar ist.

25. Vorrichtung nach einem der Anspruch 23 oder Anspruch 24, **dadurch gekennzeichnet, daß** die Steuereinrichtung mittels Kartuschen vorportionierter Applikationaflüssigkeit und/oder Kartuschen mit mit Flüssigkeit bzw. in Flüssigkeit lösbaren Applikationsmitteln programmierbar ist.

26. Vorrichtung nach einem der Ansprüche 1 bis 25, **dadurch gekennzeichnet daß** die Kanäle (8, 9, 10, 11) mit der Steuereinrichtung über Schläuche einer Schnellverschlusskupplung-lösbar verbindbar sind.

27. Vorrichtung nach einem der Ansprüche 1 bis 26, **dadurch gekennzeichnet, daß** die Flüsslgkelt Mund- bzw. Zahnreinigungs-und/oder Pflegestoffe und/oder Zahnschmelzaufbau- bzw. Zahnschmelzstärkungsstoffe beinhaltet, .

28. Vorrichtung nach Anspruch 27, **gekennzeichnet durch** Mund- bzw. Zahnrelnigungs- und/oder Pflegestoffe und/oder Zahnschmelzaufbau. bzw. Zahnachmelzstärkungestoffe in Form von Nanopartlkein oder gekapselten Mikropartikeln.

29. Vorrichtung nach einem der Ansprüche 1 bis 28, **dadurch gekennzeichnet, dass** das eine abformlöffelähnliche Form aufweisende Mundstück hinsichtlich der Form an den Oberkiefer beziehungsweise Unterkiefer eines Hundes oder einer Katze, angepasst ist.

## Claims

1. A device for cleaning and/or the care of teeth and/or gums, comprising a mouthpiece (1) having an impression spoon like shape for an upper and/or lower jaw, which mouthpiece (1) can be placed in the oral space such that teeth and/or gums are sealed with respect to the oral space, a bottom (2) which essentially extends in parallel to the upper and/or lower jaw and lateral walls (3, 4) which extend internally and externally along the rows of teeth essentially In a vertical direction with respect to said bottom (2), at least one channel (8, 9, 10) which results in at least one nozzle (12, 13, 14) for applying liquid (16, 17, 18) on teeth and/or gums, and at least one channel (11) which results in at least one opening (15) for aspirating applied liquid and/or saliva, wherein the sealing with respect to the oral space can be obtained and/or supported by aspirating applied liquid and/or saliva from the mouthpiece (1) sealed with respect to the oral space, wherein the channels (8, 9, 10) and/or nozzles (12, 13, 14) for applying liquid on teeth and/or gums and the channels (11) and/or openings (15) for aspirating applied liquid are arranged in the bottom (2), in the lateral wall (4) which extends internally along the rows of teeth and/or in the lateral wall (3) which extends externally along the rows of teeth of the mouthpiece (1),
**characterized by**
nozzles (12, 13), the openings of which are essentially directed to the vestibular or bukkal surfaces of the teeth while forming an angle between the jet direction of the nozzles (12, 13) and the Idealized tooth centre line of the teeth of about 30° with respect to the root apex of the teeth, and by nozzles (12, 14), the openings of which are essentially directed to the lingual and/or palatonal surfaces of the teeth while forming an angle between the jet direction of the nozzles (12, 14) and the idealized tooth centre line of the teeth of about 15° with respect to the root apex of the teeth.

2. A device according to claim 1, **characterized in that** the free ends of the lateral walls (3, 4) form a circumferential sealing border (5).

3. A device according to claim 1 or claim 2, **characterized in that** the openings of the nozzles (12, 13, 14) are essentially directed to the surfaces of the body substance of the teeth.

4. A device according to one of the claims 1 through 3, **characterized in that** the openings of the nozzles (12, 13, 14) are essentially directed to the surfaces of the body substance of the molar teeth and/or the front teeth.

5. A device according to one of the claims 1 through 4, **characterized in that** the openings of the nozzles (12, 13, 14) are essentially directed to the depressions in the masticatory surfaces of the molar teeth and/or to the cutting edges of the front teeth.

6. A device according to one of the claims 1 through 5, **characterized in that** the openings of the nozzles (12, 13, 14) are essentially directed to the visible dental necks.

7. A device according to one of the claims 1 through 6, **characterized in that** the openings of the nozzles (12, 13, 14) are essentially directed to the space between two teeth.

8. A device according to claim 7, **characterized in that** the openings of the nozzles (12, 13, 14) are essentially directed to the mesial and/or distal side faces of the teeth.

9. A device according to one of the claims 1 through 8, **characterized in that** the openings of the nozzles (12, 13, 14) are essentially directed to the gingival margin.

10. A device according to claim 9, **characterized in that** the openings of the nozzles (12, 13, 14) are essentially directed to the approximal and/or interdental gum papilla.

11. A device according to claim 10, **characterized in that** the openings of the nozzles (12, 13, 14) are essentially directed to the approximal and/or interdental gum papilla in the space between two teeth.

12. A device according to one of the claims 1 through 11, **characterized in that** the bottom (2) of the mouthpiece (1) comprises nap-like elevations (7) and/or depressions for the bite fixation at least in the area of the front teeth and/or side teeth.

13. A device according to one of the claims 1 through 12, **characterized in that** the mouthpiece (1) is made of rubber, silicone and/or caoutchouc.

14. A device according to claim 13, **characterized in that** the mouthpiece (1) is made of soft silicone and/or silicone caoutchouc.

15. A device according to one of the claims 1 through 14, **characterized in that** the channels (8, 9, 10, 11) are guided out of the mouthpiece (1) in the area which is situated in the zone of the incisors.

16. A device according to claim 15, **characterized in that** the channels (8, 9, 10, 11) are guided out of the mouthpiece (1) via a flange-like connecting piece (6).

17. A device according to one of the claims 1 through 16, **characterized in that** the channels (8, 9, 10) or the nozzles (12, 13, 14) can be provided with liquid in cycles which are coordinated with each other or adapted to each other for the application of liquid.

18. A device according to claim 17, **characterized in that** the channels (8, 9, 10) or nozzles (12, 13, 14) can be provided with liquid in an alternating manner for the application of liquid.

19. A device according to claim 17 or claim 18, **characterized in that** the liquid can be applied in shock pulses (16, 17, 18).

20. A device according to one of the claims 1 through 19, **characterized in that** the liquid can be applied with pre-determinable and/or individually settable pressure.

21. A device according to one of the claims 1 through 20, **characterized in that** applied liquid can be continuously aspirated, for which purpose the channels (11) or openings (15) for aspirating applied liquid can be continuously pressurized with a pressure that is lower than the ambient pressure of the mouthpiece (1).

22. A device according to claim 21, **characterized in that** the pressure which is lower than the ambient pressure of the mouthpiece (1) can be individually set.

23. A device according to one of the claims 1 through 22, **characterized in that** the application of liquid and/or the aspiration of applied liquid is realized by a programmable control unit which can be connected to the channels (8, 9, 10, 11) in the mouthpiece.

24. A device according to claim 23, **characterized in that** the control unit is individually programmable.

25. A device according to claim 23 or claim 24, **characterized in that** the control unit can be programmed by means of cartridges comprising pre-portioned application liquid and/or cartridges comprising application agents which can be dissolved with or in liquid.

26. A device according to one of the claims 1 through 25, **characterized in that** the channels (8, 8, 10, 11) can be connected in a detachable manner to the control unit via hoses by means of a quick acting closure coupling.

27. A device according to one of the claims 1 through 26, **characterized in that** the liquid comprises mouth or teeth cleaning substances and/or substances for the care of teeth and/or tooth enamel building or tooth enamel strengthening substances.

28. A device according to claim 27, **characterized by** mouth or teeth cleaning substances and/or substances for the care of teeth and/or tooth enamel building or tooth enamel strengthening substances in form of nano-particles or capsulated micro-particles.

29. A device according to one of the claims 1 through 28, **characterized In that** the mouthpiece having an impression spoon like shape Is adapted with respect to the shape to the upper Jaw or lower jaw of a dog or a cat.

## Revendications

1. Dispositif de nettoyage et/ou de soin des dents et/ou de la gencive, comprenant une embouchure (1) ayant une forme similaire à une cuillère d'empreinte pour une mâchoire supérieure et/ou une mâchoire inférieure, l'embouchure (1) pouvant être disposé dans l'espace buccal de sorte que les dents et/ou la gencive sont étanchées par rapport à l'espace buccal, un plancher (2) qui s'étend essentiellement en parallèle à la mâchoire supérieure et/ou à la mâchoire inférieure et des faces latérales (3, 4) qui s'étendent intérieurement et extérieurement le long des rangées de dents essentiellement dans une direction verticale par rapport au plancher (2), au moins un canal (8, 9, 10) qui se termine par au moins une tuyère (12, 13, 14) pour appliquer du liquide (16, 17, 18) aux dents et/ou à la gencive et au moins un canal (11) qui se termine par au moins une ouverture (15) pour aspirer du liquide appliqué et/ou de la salive, l'étanchement par rapport à l'espace buccal pouvant être obtenu et/ou soutenu par aspiration de liquide appliqué et/ou de salive dans l'embouchure rendue étanche par rapport à l'espace buccal, les canaux (8, 9, 10) et/ou les tuyères (12, 13, 14) pour appliquer du liquide aux dents et/ou à la gencive et les canaux (11) et/ou les ouvertures (15) pour aspirer du liquide appliqué étant disposés dans le plancher (2), dans la face latérale (4) qui s'étend intérieurement le long des rangées de dents et/ou dans la face latérale (3) qui s'étend extérieurement le long des rangées de dents de l'embouchure (1),
**caractérisé par**
des tuyères (12, 13) dont les ouvertures sont essentiellement dirigées vers les surfaces vestibulaires ou buccales des dents en formant un angle entre la direction de jet des tuyères (12, 19) et l'axe idéalisé des dents d'environ 30° par rapport à l'apex radiculaire des dents et par des tuyères (12, 14) dont les ouvertures sont essentiellement dirigées vers les surfaces linguales et/ou palatales des dents en formant un angle entre la direction de jet des tuyères (12, 13) et l'axe idéalisé des dents d'environ 15° par rapport à l'apex radiculaire des dents.

2. Dispositif selon la revendication 1, **caractérisé en ce que** les extrémités libres des faces latérales (3, 4) forment une bordure d'étanchéité circonférentielle.

3. Dispositif selon la revendication 1 ou la revendication 2, **caractérisé en ce que** les ouvertures des tuyères (12, 13, 14) sont essentiellement dirigées vers les surfaces du corps dentaire des dents.

4. Dispositif selon l'une des revendications 1 à 3, **caractérisé en ce que** les ouvertures des tuyères (12, 13, 14) sont essentiellement dirigées vers les surfaces du corps dentaire des molaires et/ou des dents de devant.

5. Dispositif selon l'une des revendications 1 à 4, **caractérisé en ce que** les ouvertures des tuyères (12, 13, 14) sont essentiellement dirigées vers les approfondissements dans les surfaces occlusales des molaires et/ou vers les arêtes coupantes des dents de devant.

6. Dispositif selon l'une des revendications 1 à 5, **caractérisé en ce que** les ouvertures des tuyères (12, 13, 14) sont essentiellement dirigées vers les collets visibles des dents.

7. Dispositif selon l'une des revendications 1 à 6, **caractérisé en ce que** les ouvertures des tuyères (12, 13, 14) sont essentiellement dirigées vers l'espace entre deux dents.

8. Dispositif selon la revendication 7, **caractérisé en ce que** les ouvertures des tuyères (12, 13, 14) sont essentiellement dirigées vers les faces latérales mésiales et/ou distales des dents.

9. Dispositif selon l'une des revendications 1 à 8, **caractérisé en ce que** les ouvertures des tuyères (12, 13, 14) sont essentiellement dirigées vers le liseré gingival.

10. Dispositif selon la revendication 9, **caractérisé en ce que** les ouvertures des tuyères (12, 13, 14) sont essentiellement dirigées vers la papille gingivale proximale et/ou interdentale.

11. Dispositif selon la revendication 10, **caractérisé en ce que** les ouvertures des tuyères (12, 13, 14) sont essentiellement dirigées vers la papille gingivale proximale et/ou interdentale dans l'espace entre deux dents.

12. Dispositif selon l'une des revendications 1 à 11, **caractérisé en ce que** le plancher (2) de l'embouchure (1) comprend des bosses sous forme de nopes (7) et/ou des approfondissements pour fixer l'occlusion au moins au niveau des dents de devant et/ou des dents latérales.

13. Dispositif selon l'une des revendications 1 à 12, **caractérisé en ce que** l'embouchure (1) est en gomme, silicone et/ou caoutchouc.

14. Dispositif selon la revendication 13, **caractérisé en ce que** l'embouchure (1) est en silicone douce et/ou en caoutchouc de silicone.

15. Dispositif selon l'une des revendications 1 à 14, **caractérisé en ce que** les canaux (8, 9, 10, 11) sont menés à l'extérieur de l'embouchure (1) au niveau de la zone des incisives.

16. Dispositif selon la revendication 15, **caractérisé en ce que** les canaux (8, 9, 10, 11) sont menés à l'extérieur de l'embouchure (1) par une pièce de raccordement (6) sous forme de bride.

17. Dispositif selon l'une des revendications 1 à 16, **caractérisé en ce qu'**on peut alimenter les canaux (8, 9, 10, 11) ou les tuyères (12, 13, 14) en liquide dans des cycles accordés les uns aux autres ou adaptés les uns aux autres pour l'application de liquide.

18. Dispositif selon la revendication 17, **caractérisé en ce qu'**on peut alimenter les canaux (8, 9, 10) ou les tuyères (12, 13, 14) en liquide de manière alternante pour l'application de liquide.

19. Dispositif selon la revendication 17 ou la revendication 18, **caractérisé en ce qu'**on peut appliquer le liquide aux impulsions à action de contact (16, 17, 18).

20. Dispositif selon l'une des revendications 1 à 19, **caractérisé en ce qu'**on peut appliquer le liquide avec une pression pré-déterminable et/ou individuellement ajustable.

21. Dispositif selon l'une des revendications 1 à 20, **caractérisé en ce qu'**on peut aspirer le liquide appliqué de manière continue, pour lequel on peut continuellement pressuriser les canaux (11) ou les ouvertures (15) pour l'aspiration de liquide appliqué avec une pression qui est inférieure à la pression ambiante de l'embouchure (1).

22. Dispositif selon la revendication 21, **caractérisé en ce que** la pression qui est inférieure à la pression ambiante de l'embouchure (1) est individuellement ajustable.

23. Dispositif selon l'une des revendications 1 à 22, **caractérisé en ce que** l'application de liquide et/ou l'aspiration de liquide appliqué se fait par une unité de commande programmable qu'on peut relier aux canaux (8, 9, 10, 11) dans l'embouchure.

24. Dispositif selon la revendication 23, **caractérisé en ce que** l'unité de commande est individuellement programmable.

25. Dispositif selon la revendication 23 ou la revendication 24, **caractérisé en ce que** l'unité de commande est programmable à l'aide des cartouches de liquide d'application proportionné et/ou des cartouches comprenant des agents d'application solubles avec du liquide ou dans un liquide.

26. Dispositif selon l'une des revendications 1 à 25, **caractérisé en ce qu'**on peut relier les canaux (8, 9, 10, 11) de manière détachable à l'unité de commande par des tuyaux flexibles par moyen d'un dispositif d'accouplement à fermeture rapide.

27. Dispositif selon l'une des revendications 1 à 26, **caractérisé en ce que** le liquide comprend des substances de nettoyage et/ou de soin de la bouche ou des dents et/ou des substances de création ou de renforcement d'émail des dents.

28. Dispositif selon la revendication 27, **caractérisé par** des substances de nettoyage et/ou de soin de la bouche ou des dents et/ou des substances de création ou de renforcement d'émail des dents sous forme de nano particules ou de micro particules capsulées.

29. Dispositif selon l'une des revendications 1 à 28, **caractérisé en ce que** l'embouchure ayant une forme similaire à une cuillère d'empreinte est adaptée, en ce qui concerne la forme, à la mâchoire supérieure ou à la mâchoire inférieure d'un chien ou d'un chat.
